# EUROPEAN PATENT SPECIFICATION

(11) **EP 2 333 008 B1**
(45) Date of publication and mention of the grant of the patent: **14.11.2012**
(21) Application number: 10193807.4
(22) Date of filing: 06.12.2010
(51) Int. Cl.: C08J 3/22, C08J 5/04, B60C 1/00, C08K 7/02

(54) **Tire with component containing cellulose**
Reifen mit Cellulose enthaltendem Inhaltsstoff
Pneu avec un composant contenant de la cellulose

(30) Priority: 08.12.2009 US 632910
(43) Date of publication of application: 15.06.2011
(73) Proprietor: The Goodyear Tire & Rubber Company, Akron, OH 44316-0001 (US)
(72) Inventor: Lechtenboehmer, Annette, L-9048, Ettelbruck (LU); Benko, David Andrew, Munroe Falls, OH 44262 (US); Klinkenberg, Maurice Peter Catharina Jozef, L-9188, Vichten (LU); Kulig, Joseph John, Tallmadge, OH 44278 (US); Unseld, Klaus, L-1611, Luxembourg (LU); Thielen, Georges Marcel Victor, L-4995, Schouweiler (LU); Boes, Claude Ernest Felix, L-9147, Erpeldange (LU); Fuchs, Hans-Bernd, D-54329, Konz (DE)
(74) Representative: Kutsch, Bernd

(56) References cited:
- EP-A1- 2 039 532
- EP-A1- 2 072 574
- WO-A1-2006/070770
- US-A- 3 802 478
- US-A- 4 659 754

## Description

### Background of the Invention

In an effort to include renewable resources as components in tires, naturally occurring organic materials have previously been used as fillers in tire rubber compositions. However, compatibility between the organic fillers and rubber is generally poor, leading to low filler loading due to poor filler dispersion and poor adhesion between the rubber and the filler. There is therefore a need for improved rubber compositions containing naturally occurring organic fillers.

WO-A- 2006/070770 describes a method of making a rubber composition in accordance with the preamble of claim 1. Similar methods are also described in EP-A- 2 072 574 and US-A- 3,802,478.

### Summary of the invention

The present invention is directed to a method of making a rubber composition in accordance with claim 1 and a rubber composition and a tire in accordance with claims 8 and 11 respectively.

Dependent claims refer to preferred embodiments of the invention.

### Brief Description of the Drawings

FIG. - 1 is a graph of tensile properties for several rubber samples.
FIG. - 2 is a graph of stress-strain properties for several rubber samples.
FIG. - 3 is a graph of tan delta versus strain for several rubber samples.

### Detailed Description of the Invention

There is disclosed a method of making a rubber composition, comprising the steps of mixing cellulose fibers and water to form a first mixture; mixing the first mixture with an aqueous diene-based elastomer latex to form a second mixture comprising cellulose fibers, elastomer, and water; and separating the cellulose fibers and elastomer from the water to form a elastomer/cellulose masterbatch.

In a first step, cellulose fibers and water are mixed to form a first mixture. In one embodiment, cellulose fibers may be added as an aqueous paste with a relatively high solids content of fiber. In one embodiment, the cellulose fibers is added as an aqueous paste with from 5 to 50 percent by weight of cellulose fibers. The cellulose fibers are mixed with sufficient water to obtain a mixture of cellulose in water that may be mixed with an elastomer latex.

In a second step, the first mixture of cellulose fibers and water is mixed with a diene-based elastomer latex to form a second mixture. The amount of latex combined with the first mixture of cellulose fibers and water is such as to result in the desired ratio of elastomer to cellulose in the final masterbatch. Suitable diene-based elastomer latex includes natural rubber latex, polyisoprene latex, styrenebutadiene rubber latex, polybutadiene rubber latex, and nitrile rubber latex.

In a third step, water is separated from the second mixture containing the cellulose fiber, elastomer, and water to obtain the final masterbatch of cellulose fibers and elastomer. Separation may be done using any of the various techniques as are known in the art, including but not limited to filtration, centrifugation, and drying.

The elastomer/cellulose masterbatch is used in a rubber composition. In one embodiment, the rubber composition includes elastomer and cellulose from the masterbatch, and other additives as are described as follows.

The rubber composition thus includes a cellulose fiber. By cellulose fiber, it is meant that the cellulose therein is substantially free of lignin. As described herein, the term "cellulose fiber" is intended to exclude those cellulosic materials containing substantial amounts of lignin, such as wood fiber. In one embodiment, the cellulose fiber is from 95 to 99.5 percent cellulose.

In one embodiment, the cellulose fiber has an average length of from 15 to 25 micrometer. In one embodiment, the cellulose fiber has an average length of from 15 to 20 micrometer. In one embodiment, the cellulose fiber has an average length of from 10 to 20 micrometer. In one embodiment, the cellulose fiber has an average length of from 12 to 18 micrometer.

In one embodiment, the cellulose fiber is a cellulose having a diameter ranging from 1 to 4000 nanometers. In one embodiment, the cellulose fiber is a cellulose having a diameter ranging from 1 to 1000 nanometers. In one embodiment, the cellulose fiber is a cellulose having a diameter ranging from 5 to 500 nanometers.

Suitable cellulose fiber is available commercially from J. Rettenmaier & Söhne GmbH as Arbocel® Arbocel Nano Disperse Cellulose MH 40-10 (10 percent by weight solids) or MH 40-40 (40 percent by weigh solids).

In one embodiment, from 1 to 10 phr of an additive effective in coupling the cellulose to rubber may be added during the mixing of the first mixture. In accordance with the invention, from 1 to 10 phr of 3, 3'-dithiopropionic acid is added during the mixing of the mixture.

In one embodiment, the cellulose fiber is present in the rubber composition in a concentration ranging from 1 to 30 parts, by weight per 100 parts by weight of diene based elastomer (phr). In another embodiment, the cellulose fiber is present in the rubber composition in a concentration ranging from 5 to 25 parts by weight per 100 parts by weight of diene based elastomer (phr). In another embodiment, the cellulose fiber is present in the rubber composition in a concentration ranging from 10 to 20 parts by weight per 100 parts by weight of diene based elastomer (phr).

The rubber composition may be used with rubbers or elastomers containing olefinic unsaturation. The phrases "rubber or elatomer containing olefinic unsaturation" or "diene based elastomer" are intended to include both natural rubber and its various raw and reclaim forms as well as various synthetic rubbers. In the description of this invention, the terms "rubber" and "elastomer" may be used interchangeably, unless otherwise prescribed. The terms "rubber composition," "compounded rubber" and "rubber compound" are used interchangeably to refer to rubber which has been blended or mixed with various ingredients and materials and such terms are well known to those having skill in the rubber mixing or rubber compounding art. Representative synthetic polymers are the homopolymerization products of butadiene and its homologues and derivatives, for example, methylbutadiene, dimethylbutadiene and pentadiene as well as copolymers such as those formed from butadiene or its homologues or derivatives with other unsaturated monomers. Among the latter are acetylenes, for example, vinyl acetylene; olefins, for example, isobutylene, which copolymerizes with isoprene to form butyl rubber; vinyl compounds, for example, acrylic acid, acrylonitrile (which polymerize with butadiene to form NBR), methacrylic acid and styrene, the latter compound polymerizing with butadiene to form SBR, as well as vinyl esters and various unsaturated aldehydes, ketones and ethers, e.g., acrolein, methyl isopropenyl ketone and vinylethyl ether. Specific examples of synthetic rubbers include neoprene (polychloroprene), polybutadiene (including cis-1,4-polybutadiene), polyisoprene (including cis-1,4-polyisoprene), butyl rubber, halobutyl rubber such as chlorobutyl rubber or bromobutyl rubber, styrene/isoprene/butadiene rubber, copolymers of 1,3-butadiene or isoprene with monomers such as styrene, acrylonitrile and methyl methacrylate, as well as ethylene/propylene terpolymers, also known as ethylene/propylene/diene monomer (EPDM), and in particular, ethylene/propylene/ dicyclopentadiene terpolymers. Additional examples of rubbers which may be used include alkoxy-silyl end functionalized solution polymerized polymers (SBR, PBR, IBR and SIBR), silicon-coupled and tin-coupled star-branched polymers. The preferred rubber or elastomers are polyisoprene (natural or synthetic), polybutadiene and SBR.

In one aspect the rubber is preferably of at least two of diene based rubbers. For example, a combination of two or more rubbers is preferred such as cis 1,4-polyisoprene rubber (natural or synthetic, although natural is preferred), 3,4-polyisoprene rubber, styrene/isoprene/butadiene rubber, emulsion and solution polymerization derived styrene/butadiene rubbers, cis 1,4-polybutadiene rubbers and emulsion polymerization prepared butadiene/acrylonitrile copolymers.

In one aspect of this invention, an emulsion polymerization derived styrene/butadiene (E-SBR) might be used having a relatively conventional styrene content of 20 to 28 percent bound styrene or, for some applications, an E-SBR having a medium to relatively high bound styrene content, namely, a bound styrene content of 30 to 45 percent.

By emulsion polymerization prepared E-SBR, it is meant that styrene and 1,3-butadiene are copolymerized as an aqueous emulsion. The bound styrene content can vary, for example, from 5 to 50 percent. In one aspect, the E-SBR may also contain acrylonitrile to form a terpolymer rubber, as E-SBAR, in amounts, for example, of 2 to 30 weight percent bound acrylonitrile in the terpolymer.

Emulsion polymerization prepared styrene/butadiene/acrylonitrile copolymer rubbers containing 2 to 40 weight percent bound acrylonitrile in the copolymer are also contemplated as diene based rubbers for use in this invention.

The solution polymerization prepared SBR (S-SBR) typically has a bound styrene content in a range of 5 to 50, preferably 9 to 36, percent. The S-SBR can be conveniently prepared, for example, by organo lithium catalyzation in the presence of an organic hydrocarbon solvent.

In one embodiment, cis 1,4-polybutadiene rubber (BR) may be used. Such BR can be prepared, for example, by organic solution polymerization of 1,3-butadiene. The BR may be conveniently characterized, for example, by having at least a 90 percent cis 1,4-content.

The term "phr" as used herein, and according to conventional practice, refers to "parts by weight of a respective material per 100 parts by weight of rubber, or elastomer."

The rubber composition may also include up to 70 phr of processing oil. Processing oil may be included in the rubber composition as extending oil typically used to extend elastomers. Processing oil may also be included in the rubber composition by addition of the oil directly during rubber compounding. The processing oil used may include both extending oil present in the elastomers, and process oil added during compounding. Suitable process oils include various oils as are known in the art, including aromatic, paraffinic, naphthenic, vegetable oils, and low PCA oils, such as MES, TDAE, SRAE and heavy naphthenic oils. Suitable low PCA oils include those having a polycyclic aromatic content of less than 3 percent by weight as determined by the IP346 method. Procedures for the IP346 method may be found in Standard Methods for Analysis & Testing of Petroleum and Related Products and British Standard 2000 Parts, 2003, 62nd edition, published by the Institute of Petroleum, United Kingdom.

The rubber composition may include from 10 to 150 phr of silica. In another embodiment, from 20 to 80 phr of silica may be used.

The commonly employed siliceous pigments which may be used in the rubber compound include conventional pyrogenic and precipitated siliceous pigments (silica). In one embodiment, precipitated silica is used. The conventional siliceous pigments employed in this invention are precipitated silicas such as, for example, those obtained by the acidification of a soluble silicate, e.g., sodium silicate.

Such conventional silicas might be characterized, for example, by having a BET surface area, as measured using nitrogen gas. In one embodiment, the BET surface area may be in the range of 40 to 600 square meters per gram. In another embodiment, the BET surface area may be in a range of 80 to 300 square meters per gram. The BET method of measuring surface area is described in the Journal of the American Chemical Society, Volume 60, Page 304 (1930).

The conventional silica may also be characterized by having a dibutylphthalate (DBP) absorption value in a range of 100 to 400, alternatively 150 to 300.

Various commercially available silicas may be used, such as, only for example herein, and without limitation, silicas commercially available from PPG Industries under the Hi-Sil trademark with designations 210 and 243; silicas available from Rhodia, with, for example, designations of Z1165MP and Z165GR and silicas available from Degussa AG with, for example, designations VN2 and VN3.

Commonly employed carbon blacks can be used as a conventional filler in an amount ranging from 10 to 150 phr. In another embodiment, from 20 to 80 phr of carbon black may be used. Representative examples of such carbon blacks include N110, N121, N134, N220, N231, N234, N242, N293, N299, N315, N326, N330, N332, N339, N343, N347, N351, N358, N375, N539, N550, N582, N630, N642, N650, N683, N754, N762, N765, N774, N787, N907, N908, N990 and N991. These carbon blacks have iodine absorptions ranging from 9 to 145 g/kg and DBP number ranging from 34 to 150 cm³/100g.

Other fillers may be used in the rubber composition including, but not limited to, particulate fillers including ultra high molecular weight polyethylene (UHMWPE), crosslinked particulate polymer gels including those disclosed in US-B- 6,242,534; US-B- 6,207,757; US-B- 6,133,364; US-B- 6,372,857; US-B- 5,395,891; or US-B-6,127,488, and plasticized starch composite filler including that disclosed in US-B-5,672,639. Such other fillers may be used in an amount ranging from 1 to 30 phr.

In one embodiment the rubber composition may contain a conventional sulfur containing organosilicon compound. Examples of suitable sulfur containing organosilicon compounds are of the formula:

Z―Alk―Sₙ―Alk―Z

in which Z is selected from the group consisting of 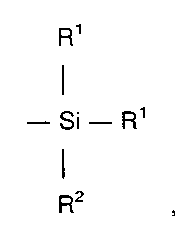 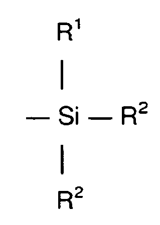 and 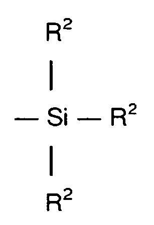 where R¹ is an alkyl group of 1 to 4 carbon atoms, cyclohexyl or phenyl; R² is alkoxy of 1 to 8 carbon atoms, or cycloalkoxy of 5 to 8 carbon atoms; Alk is a divalent hydrocarbon of 1 to 18 carbon atoms and n is an integer of 2 to 8.

In one embodiment, the sulfur containing organosilicon compounds are the 3,3'-bis(trimethoxy or triethoxy silylpropyl) polysulfides. In one embodiment, the sulfur containing organosilicon compounds are 3,3'-bis(triethoxysilylpropyl) disulfide and/or 3,3'-bis(triethoxysilylpropyl) tetrasulfide. Therefore, as to formula I, Z may be 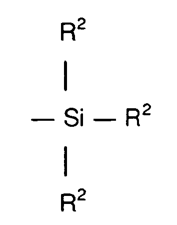 where R² is an alkoxy of 2 to 4 carbon atoms, alternatively 2 carbon atoms; alk is a divalent hydrocarbon of 2 to 4 carbon atoms, alternatively with 3 carbon atoms; and n is an integer of from 2 to 5, alternatively 2 or 4.

In another embodiment, suitable sulfur containing organosilicon compounds include compounds disclosed in US-B- 6,608,125. In one embodiment, the sulfur containing organosilicon compounds includes 3-(octanoylthio)-1-propyltriethoxysilane, CH₃(CH₂)₆C(=O) —S—CH₂CH₂CH₂Si(OCH₂CH₃)₃, which is available commercially as NXT™ from Momentive Performance Materials.

In another embodiment, suitable sulfur containing organosilicon compounds include those disclosed in US-A- 2003/0130535. In one embodiment, the sulfur containing organosilicon compound is Si-363 from Degussa.

The amount of the sulfur containing organosilicon compound in a rubber composition will vary depending on the level of other additives that are used. Generally speaking, the amount of the compound will range from 0.5 to 20 phr. In one embodiment, the amount will range from 1 to 10 phr.

It is readily understood by those having skill in the art that the rubber composition would be compounded by methods generally known in the rubber compounding art, such as mixing the various sulfur-vulcanizable constituent rubbers with various commonly used additive materials such as, for example, sulfur donors, curing aids, such as activators and retarders and processing additives, such as oils, resins including tackifying resins and plasticizers, fillers, pigments, fatty acid, zinc oxide, waxes, antioxidants and antiozonants and peptizing agents. As known to those skilled in the art, depending on the intended use of the sulfur vulcanizable and sulfur-vulcanized material (rubbers), the additives mentioned above are selected and commonly used in conventional amounts. Representative examples of sulfur donors include elemental sulfur (free sulfur), an amine disulfide, polymeric polysulfide and sulfur olefin adducts. In one embodiment, the sulfur-vulcanizing agent is elemental sulfur. The sulfur-vulcanizing agent may be used in an amount ranging from 0.5 to 8 phr. Typical amounts of tackifier resins, if used, comprise 0.5 to 10 phr. Typical amounts of processing aids comprise about 1 to about 50 phr. Typical amounts of antioxidants comprise 1 to 5 phr. Representative antioxidants may be, for example, diphenyl-p-phenylenediamine and others, such as, for example, those disclosed in The Vanderbilt Rubber Handbook (1978), Pages 344 through 346. Typical amounts of antiozonants comprise 1 to 5 phr. Typical amounts of fatty acids, if used, which can include stearic acid comprise 0.5 to 3 phr. Typical amounts of zinc oxide comprise 1 to 5 phr. Typical amounts of waxes comprise 1 to 5 phr. Often microcrystalline waxes are used. Typical amounts of peptizers comprise 0.1 to 1 phr. Typical peptizers may be, for example, pentachlorothiophenol and dibenzamidodiphenyl disulfide.

Accelerators are used to control the time and/or temperature required for vulcanization and to improve the properties of the vulcanizate. In one embodiment, a single accelerator system may be used, i.e., primary accelerator. The primary accelerator(s) may be used in total amounts ranging from 0.5 to 4, alternatively 0.8 to 1.5, phr. In another embodiment, combinations of a primary and a secondary accelerator might be used with the secondary accelerator being used in smaller amounts, such as from 0.05 to 3 phr, in order to activate and to improve the properties of the vulcanizate. In addition, delayed action accelerators may be used which are not affected by normal processing temperatures but produce a satisfactory cure at ordinary vulcanization temperatures. Vulcanization retarders might also be used. Suitable types of accelerators that may be used in the present invention are amines, disulfides, guanidines, thioureas, thiazoles, thiurams, sulfenamides, dithiocarbamates and xanthates. In one embodiment, the primary accelerator is a sulfenamide. If a second accelerator is used, the secondary accelerator may be a guanidine, dithiocarbamate or thiuram compound.

The mixing of the rubber composition can be accomplished by methods known to those having skill in the rubber mixing art. For example, the ingredients are typically mixed in at least two stages, namely, at least one non-productive stage followed by a productive mix stage. The final curatives including sulfur-vulcanizing agents are typically mixed in the final stage which is conventionally called the "productive" mix stage in which the mixing typically occurs at a temperature, or ultimate temperature, lower than the mix temperature(s) than the preceding non-productive mix stage(s). The rubber composition may be subjected to a thermomechanical mixing step. The thermomechanical mixing step generally comprises a mechanical working in a mixer or extruder for a period of time suitable in order to produce a rubber temperature between 140°C and 190°C. The appropriate duration of the thermomechanical working varies as a function of the operating conditions, and the volume and nature of the components. For example, the thermomechanical working may be from 1 to 20 minutes.

The rubber composition may be incorporated in a variety of rubber components of the tire. For example, the rubber component may be a tread (including tread cap and tread base), a sidewall, a apex, a chafer, a sidewall insert, a wirecoat or an innerliner. In one embodiment, the component is a tread.

The pneumatic tire of the present invention may be a race tire, passenger tire, aircraft tire, agricultural, earthmover, off-the-road, a truck tire. In one embodiment, the tire is a passenger or truck tire. The tire may also be a radial or bias.

Vulcanization of the pneumatic tire of the present invention is generally carried out at conventional temperatures ranging from 100°C to 200°C. Any of the usual vulcanization processes may be used such as heating in a press or mold, heating with superheated steam or hot air.

The invention is further illustrated by the following examples.

### Example 1

In this example, the method of combining a 10 percent by weight aqueous dispersion cellulose fiber with an elastomer latex to prepare a 15 phr cellulose in elastomer mixture is illustrated. In a first step, 400 g of a cellulose paste (Arbocel Nano Disperse Cellulose MH 40-10, from J. Rettenmaier & Sohne) containing 10 percent by weight of solids was diluted with 400 g of water. The mixture was stirred for 30 minutes, with a final pH of 5.2. In a separate mix step, 430 g of high ammonia natural rubber latex containing 61.9 percent by weight of solids at pH 10.3 was diluted with 430 g of water and 5 g of a 50 percent by weight hindered phenol antioxidant (Bostex 24). The latex mixture was stirred for 25 minutes. Subsequently, the latex mixture was transferred to a container with a 36 g water rinse, followed by addition of the cellulose mixture over 1 minute with a 123 g water rinse, with continuous agitation. The combined latex and cellulose dispersion was stirred for 15 minutes.

The latex cellulose dispersion was dried via application of 50 to 100 g lots of the dispersion to a hot mill (drum dryer) at 141°C. Solid rubber/cellulose samples of approximately 30 g were collected at the knife edges. Each sample was dried by passing through the mill 5 times. A total of 289 g was collected (theoretical yield 307 g, 95 percent recovery). Final moisture content was 0.57 percent with a Mooney viscosity MS(1 +4) of 60.3 and Tg of -62.2°C. The samples were stabilized with 0.5 phr of Bostex 24. This product is referred to as Sample 1.

### Example 2

The procedure of Example 1 was repeated, except for use of 400 g of 40 percent by weight aqueous dispersion cellulose fiber (Arbocel Nano Disperse Cellulose MH 40-40, from J. Rettenmaier & Sohne) instead of the 10 percent by weight material. All other amounts doubled to yield 578 g of 15 phr cellulose in elastomer with a final moisture content of 0.43 percent, a Mooney MS(1 +4) of 75.1 and Tg of -62.1°C. This product is referred to as Sample 2.

### Example 3

The procedure of Example 2 was repeated, except for addition of 1 phr of 3,3'-dithiopropionic acid. The yield was 567 g of 15 phr cellulose and 1 phr 3,3'-dithiopropionic acid in elastomer with a final moisture content of 1.31 percent, a Mooney MS(1+4) of 70.6 and Tg of -62.1°C. This product is referred to as Sample

### Example 4

In this example, the effect of combining the samples of Examples 1, 2 and 3 in rubber compounds is illustrated. Nine rubber compounds were prepared following the recipe in Table 1, with all amount shown in phr. Rubber compounds were mixed using a two-step mix procedure with one non-productive mix step and one productive mix step in a Brabender Plasticorder and cured to 10 min at 150°C, near t₉₀. Sample 4 was a control with no added cellulose. Samples 9 and 10 were comparative, containing a cellulose having a larger diameter. Samples 5 to 7 and 11 are also comparative and contained the samples of Examples 1 or 2. Samples 8 and 12 contained the samples of Example 3 and are representative of the present invention.

The samples were tested for viscoelastic properties using RPA. "RPA" refers to a Rubber Process Analyzer as RPA 2000™ instrument by Alpha Technologies, formerly the Flexsys Company and formerly the Monsanto Company. References to an RPA 2000 instrument may be found in the following publication: H. A. Palowski. et al, Rubber World, June 1992 and January 1997, as well as Rubber & Plastics News, April 26 and May 10, 1993:

The "RPA" test results in Table 2 are reported as being from data obtained at 100°C in a dynamic shear mode at a frequency of 1 Hertz and at the reported dynamic strain values: Tensile properties were also measured and reported in Table 2.

A graph of tensile properties is given in FIG. -1. A graph of stress-strain properties for samples 4 through 12 is given in FIG. -2. A graph of tan delta versus strain for samples 4 through 12 is given in FIG. -3.

**Table 1**

| Sample No. | 4 | 5 | 6 | 7 | 8 | 9 | 10 | 11 | 12 |
|---|---|---|---|---|---|---|---|---|---|
| Type | cont | comp | comp | comp | inv | comp | comp | comp | inv |

| Non-Productive Mix Step | | | | | | | | | |
|---|---|---|---|---|---|---|---|---|---|
| Natural Rubber | 100 | 0 | 0 | 0 | 0 | 100 | 100 | 0 | 0 |
| Sample 1¹ | 0 | 115 | 115 | 0 | 0 | 0 | 0 | 0 | 0 |
| Sample 2² | 0 | 0 | 0 | 115 | 0 | 0 | 0 | 115 | 0 |
| Sample 3³ | 0 | 0 | 0 | 0 | 115 | 0 | 0 | 0 | 115 |
| Carbon Black | 45 | 0 | 30 | 30 | 30 | 0 | 30 | 0 | 0 |
| Cellulose⁴ | 0 | 0 | 0 | 0 | 0 | 15 | 15 | 0 | 0 |
| Antidegradant⁵ | 1 | 1 | 1 | 1 | 1 | 1 | 1 | 1 | 1 |
| Zinc Oxide | 5 | 5 | 5 | 5 | 5 | 5 | 5 | 5 | 5 |
| Stearic Acid | 2 | 2 | 2 | 2 | 2 | 2 | 2 | 2 | 2 |

| Productive Mix Step | | | | | | | | | |
|---|---|---|---|---|---|---|---|---|---|
| Sulfur | 2 | 2 | 2 | 2 | 2 | 2 | 2 | 2 | 2 |
| Accelerator⁶ | 1.1 | 1.1 | 1.1 | 1.1 | 1.1 | 1.1 | 1.1 | 1.1 | 1.1 |

| | | | | | | | | | |
|---|---|---|---|---|---|---|---|---|---|
| ¹ Product of Example 1, 15 phr cellulose in natural rubber ² Product of Example 2, 15 phr cellulose in natural rubber ³ Product of Example 3, 15 phr cellulose with 1 phr of 3,3' dithiopropionic acid in natural rubber ⁴Arbocel 600-10 TG, from J. Rettenmaier & Sohne ⁵ Para-phenylene diamine type ⁶ Sulfenamide type | | | | | | | | | |

**Table 2**

| Sample No. | 4 | 5 | 6 | 7 | 8 | 9 | 10 | 11 | 12 |
|---|---|---|---|---|---|---|---|---|---|
| RPA2000 | | | | | | | | | |
| Test: @ 100°C, Frequency=11 Hz, Strain Sweep=0.7/1.0/2.0/3.1/5.0/7.0/10.0/14.0. | | | | | | | | | |
| G',1 % strain, MPa | 3.06 | 0.67 | 1.41 | 1.38 | 1.5 | 0.66 | 1.7 | 0.67 | 0.71 |
| G', 5 % strain, MPa | 2.21 | 0.66 | 1.25 | 1.23 | 1.35 | 0.65 | 1.41 | 0.65 | 0.7 |
| G',10% strain, MPa | 1.89 | 0.66 | 1.14 | 1.14 | 1.23 | 0.65 | 1.27 | 0.65 | 0.7 |
| Tanδ, 10% strain | 0.117 | 0.017 | 0.069 | 0.062 | 0.062 | 0.014 | 0.081 | 0.018 | 0.018 |

| Cure: Best @ 150°C; Test: @ 23°C, Pulling Speed=20 cm/min | | | | | | | | | |
|---|---|---|---|---|---|---|---|---|---|
| Elong. At Break,% | 499 | 577 | 532 | 523 | 510 | 607 | 580 | 554 | 590 |
| 100% Mod.,Mpa | 2.9 | 1.6 | 2.9 | 3.0 | 3.1 | 1.1 | 1.9 | 1.7 | 1.5 |
| 300% Mod.,MPa | 13.7 | 5.7 | 11.7 | 12.0 | 12.0 | 2.3 | 7.6 | 6.3 | 5.4 |
| Tens. Strength,MPa | 29.4 | 26.0 | 30.4 | 30.5 | 28.8 | 15.6 | 28.7 | 25.6 | 25.7 |

As seen in FIG. -1, modulus values show the reinforcing properties of the cellulose compounds: the non-black compounds with cellulose (Samples 5 and 11) have a higher modulus and tensile strength than the one with the "coarse" cellulose (Sample 9). The same is true to a lesser extent for the combinations of cellulose with carbon black (Samples 6, 7 and 8 versus Sample 10).

This behavior is confirmed by the stress strain curves as shown in FIG. -1; note the differences between Samples 5 and 11 versus Sample 9, and between 6. 7 and 8 versus Sample 10. Samples 6 and 7 containing 15 phr cellulose and 30 phr black matched the stress-strain behavior of the full black compound Sample 4 with 45 phr black. By contrast, Sample 10 with 15 phr "coarse" cellulose and 30 phr black could not had much inferior stress-strain behavior compared to control Sample 4.

Hysteresis, as indicated by tangent delta measure using RPA at 100°C, is lower for the carbon black/cellulose combinations than for the carbon black/"coarse" cellulose combination.

The data overall indicate that the use of cellulose in rubber shows strong reinforcing effects, an increase in modulus and tensile, a positive effect on hysteresis, compared to "coarse" cellulose.

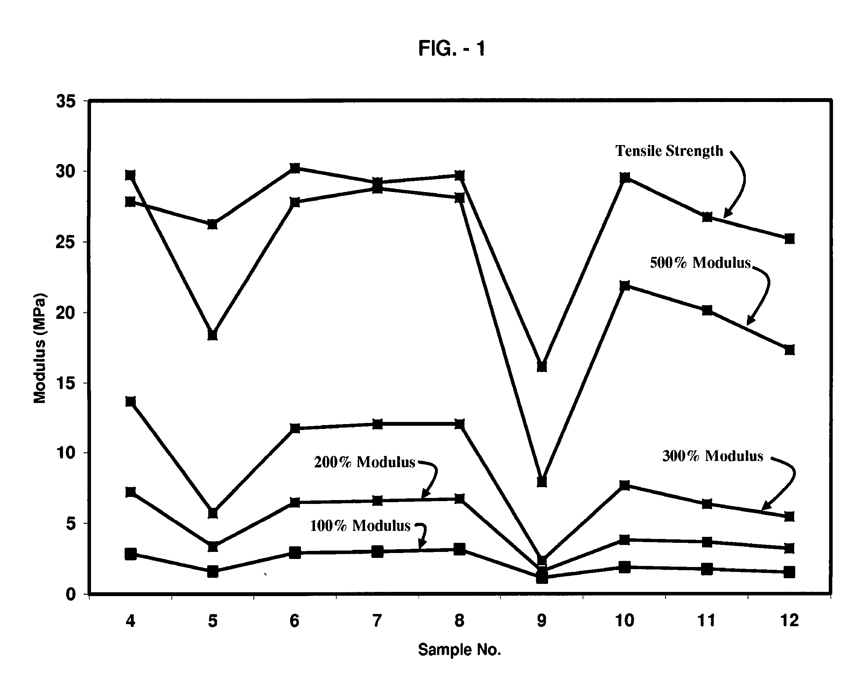

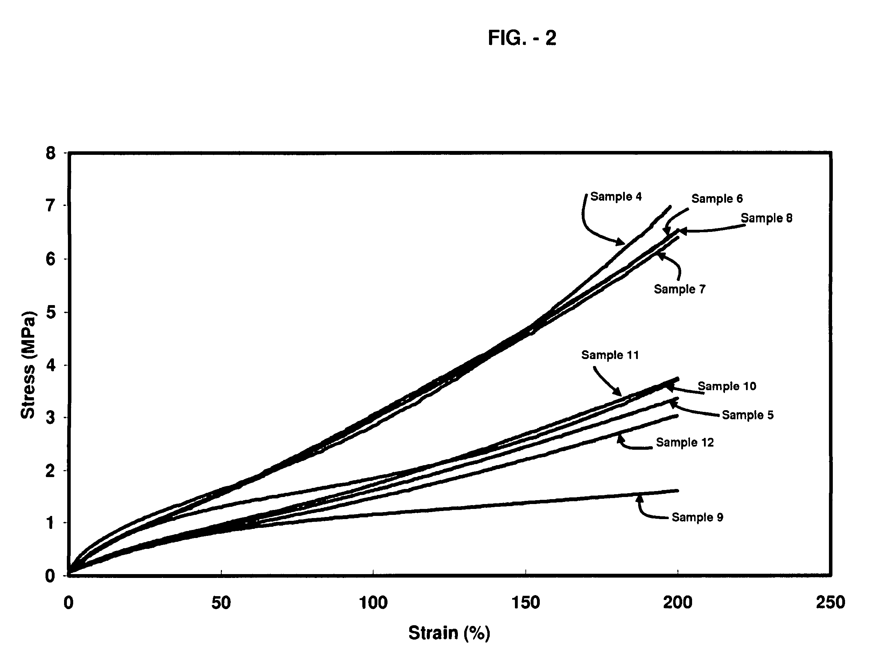

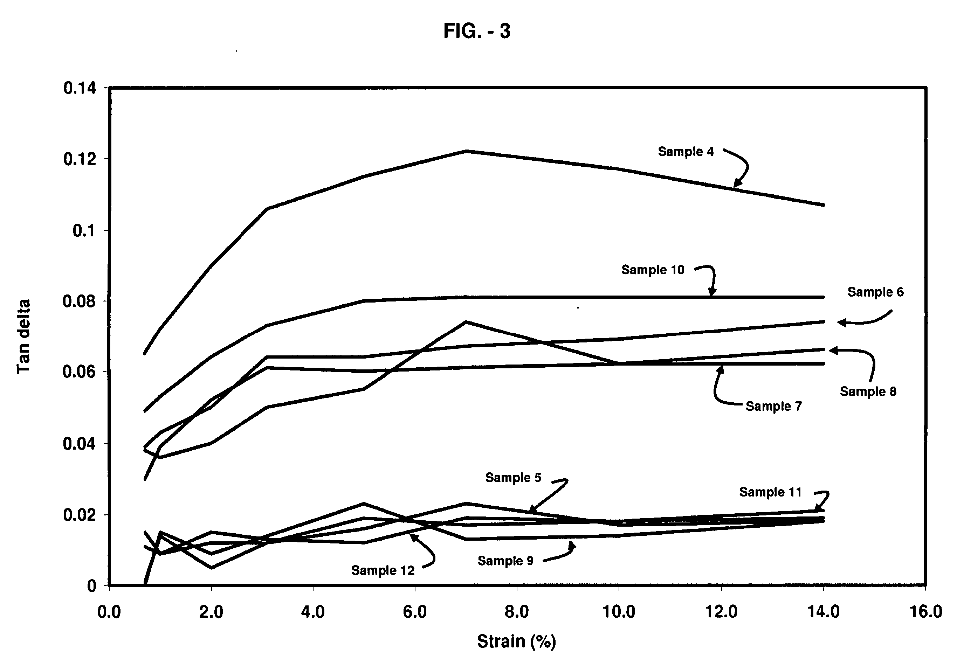

## Claims

1. A method of making a rubber composition, the method comprising the steps of:
mixing cellulose fibers and water to form a first mixture;
mixing the first mixture with an aqueous diene-based elastomer latex to form a second mixture comprising cellulose fibers, elastomer, and water; and separating the cellulose fibers and elastomer from the water to form a elastomer/cellulose masterbatch, **characterized in that** the method further comprises additing of from 1 phr to 10 phr of 3,3' dithiopropionic acid to the first mixture.

2. The method of claim 1 wherein the cellulose fibers have an average diameter in a range of from 1 nm to 4000 nm.

3. The method of claim 1 wherein the cellulose fibers have an average diameter in a range of from 5 nm to 1000 nm.

4. The method of claim 1 wherein the cellulose fibers have an average diameter in a range of from 10 nm to 500 nm.

5. The method of at least one of the previous claims wherein the cellulose fiber is present in the elastomer/cellulose masterbatch in a concentration ranging from 5 to 25 parts by weight per 100 parts by weight of diene based elastomer (phr).

6. The method of at least one of the previous claims wherein the cellulose fibers have an average length in a range of from 15 to 25 micrometer.

7. The method of claim 6 wherein the cellulose fibers have an average length in a range of from 15 to 20 micrometer.

8. A rubber composition comprising the cellulose/elastomer masterbatch made by a method in accordance with at least one of the previous claims.

9. The rubber composition of claim 8 wherein the rubber composition further comprises from 20 to 80 phr of carbon black.

10. The rubber composition of claim 8 or 9 wherein the rubber composition further comprises from 20 to 80 phr of silica.

11. A pneumatic tire comprising the rubber composition of claim 8, 9 or 10.

## Patentansprüche

1. Verfahren zur Herstellung einer Kautschukzusammensetzung, wobei das Verfahren die Schritte umfasst des:
Mischens von Cellulosefasern und Wasser, um eine erste Mischung zu bilden;
Mischens der ersten Mischung mit einem wässrigen dienbasierten Elastomerlatex, um eine zweite Mischung zu bilden, die Cellulosefasern, Elastomer und Wasser enthält; und Abscheiden der Cellulosefasern und des Elastomers von dem Wasser, um einen Elastomer-Cellulose-Masterbatch zu bilden, **dadurch gekennzeichnet, dass** das Verfahren weiter den Zusatz von 1 ThK bis 10 ThK 3,3'-Dithiopropionsäure zu der ersten Mischung umfasst.

2. Verfahren nach Anspruch 1, wobei die Cellulosefasern einen durchschnittlichen Durchmesser in einem Bereich von 1 nm bis 4000 nm aufweisen.

3. Verfahren nach Anspruch 1, wobei die Cellulosefasern einen durchschnittlichen Durchmesser in einem Bereich von 5 nm bis 1000 nm aufweisen.

4. Verfahren nach Anspruch 1, wobei die Cellulosefasern einen durchschnittlichen Durchmesser in einem Bereich von 10 nm bis 500 nm aufweisen.

5. Verfahren nach mindestens einem der vorgenannten Ansprüche, wobei die Cellulosefaser in dem Elastomer-Cellulose-Masterbatch in einer Konzentration vorhanden ist, die sich auf 5 bis 25 Gewichtsteile je 100 Gewichtsteile dienbasiertes Elastomer (ThK) beläuft.

6. Verfahren nach mindestens einem der vorgenannten Ansprüche, wobei die Cellulosefasern eine durchschnittliche Länge in einem Bereich von 15 bis 25 Mikrometern aufweisen.

7. Verfahren nach Anspruch 6, wobei die Cellulosefasern eine durchschnittliche Länge in einem Bereich von 15 bis 20 Mikrometern aufweisen.

8. Kautschukzusammensetzung, umfassend den durch ein Verfahren in Übereinstimmung mit mindestens einem der vorgenannten Ansprüche hergestellten Cellulose-Elastomer-Masterbatch.

9. Kautschukzusammensetzung nach Anspruch 8, wobei die Kautschukzusammensetzung weiter 20 bis 80 ThK Carbon Black enthält.

10. Kautschukzusammensetzung nach Anspruch 8 oder 9, wobei die Kautschukzusammensetzung weiter 20 bis 80 ThK Silika enthält.

11. Luftreifen, umfassend die Kautschukzusammensetzung nach Anspruch 8, 9 oder 10.

## Revendications

1. Procédé de préparation d'une composition de caoutchouc, le procédé comprenant les étapes consistant à :
mélanger des fibres de cellulose et de l'eau pour obtenir un premier mélange ;
mélanger le premier mélange avec un latex élastomère aqueux à base diénique pour obtenir un deuxième mélange comprenant des fibres de cellulose, l'élastomère et de l'eau ; et
séparer les fibres de cellulose et l'élastomère de l'eau pour former un mélange maître élastomère/cellulose, **caractérisé en ce que** le procédé comprend en outre l'addition d'acide 3,3-dithiopropionique au premier mélange à concurrence de 1 phr à 10 phr.

2. Procédé selon la revendication 1, dans lequel les fibres de cellulose possèdent un diamètre moyen dans la plage de 1 nm à 4000 nm.

3. Procédé selon la revendication 1, dans lequel les fibres de cellulose possèdent un diamètre moyen dans la plage de 5 nm à 1000 nm.

4. Procédé selon la revendication 1, dans lequel les fibres de cellulose possèdent un diamètre moyen dans la plage de 10 nm à 500 nm.

5. Procédé selon au moins une des revendications précédentes, dans lequel la fibre de cellulose est présente dans le mélange maître élastomère/cellulose en une concentration qui se situe dans la plage de 5 à 25 parties en poids par 100 parties en poids de l'élastomère à base diénique (phr).

6. Procédé selon au moins une des revendications précédentes, dans lequel les fibres de cellulose possèdent une longueur moyenne dans la plage de 15 à 25 µm.

7. Procédé selon la revendication 6, dans lequel les fibres de cellulose possèdent une longueur moyenne dans la plage de 15 à 20 µm.

8. Composition de caoutchouc comprenant le mélange maître cellulose/élastomère préparé via un procédé selon au moins une des revendications précédentes.

9. Composition de caoutchouc selon la revendication 8, dans laquelle la composition de caoutchouc comprend en outre du noir de carbone à concurrence de 20 à 80 phr.

10. Composition de caoutchouc selon la revendication 8, dans laquelle la composition de caoutchouc comprend en outre de la silice à concurrence de 20 à 80 phr.

11. Bandage pneumatique comprenant la composition de caoutchouc selon la revendication 8, 9 ou 10.
